# EUROPÄISCHE PATENTANMELDUNG

(11) **EP 4 327 987 A1**
(43) Veröffentlichungstag der Anmeldung: **28.02.2024**
(21) Anmeldenummer: 23192316.0
(22) Anmeldetag: 21.08.2023
(51) Int. Cl.: B25J 9/16

(54) **SYSTEM, VERFAHREN, COMPUTERPROGRAMM UND COMPUTERLESBARES MEDIUM ZUR ERFASSUNG UND AUSGABE VON EIGENSCHAFTEN**

(30) Priorität: 26.08.2022 DE 102022121635
(71) Anmelder: Telefónica Germany GmbH & Co. OHG, 80992 München (DE)
(72) Erfinder: Müllner, Robert, 81479 München (DE); Widder, Dr. Wolfgang, 82362 Weilheim (DE); Leth-Espensen, Mads, 82110 Germering (DE)
(74) Vertreter: Herrmann, Uwe

(57) **Zusammenfassung**

Die vorliegende Erfindung betrifft ein System, wobei das System ein Erfassungsmittel, Umwandlungsmittel und ein Steuermittel umfasst, wobei das Erfassungsmittel dazu ausgebildet ist, an einem Erfassungsort eine Eigenschaft mit wenigstens einem Teil zu erfassen, wobei das Steuermittel dazu ausgebildet ist, an einem Steuerort eine der Eigenschaft entsprechende Ausgabe vorzunehmen, wobei die Umwandlungsmittel dazu ausgebildet sind, die an dem Erfassungsort erfasste Eigenschaft in die entsprechende Ausgabe an dem Steuerort umzuwandeln.

## Beschreibung

Die vorliegende Erfindung betrifft ein System, wobei das System ein Erfassungsmittel, Umwandlungsmittel und ein Steuermittel umfasst, wobei das Erfassungsmittel dazu ausgebildet ist, an einem Erfassungsort eine Eigenschaft mit wenigstens einem Teil zu erfassen, wobei das Steuermittel dazu ausgebildet ist, an einem Steuerort eine der Eigenschaft entsprechende Ausgabe vorzunehmen.

Neben dem Anstieg der Häufigkeit von Videokonferenzen werden auch Anwendungen aus dem Bereich der virtuellen Realität immer populärer und mit den in zukünftigen 5G-Systemen erreichbaren kurzen Latenzzeiten auf Anwendungen erweitert, die den Tastsinn betreffen. Damit wird es möglich sein, über mobile Kommunikationsnetze nicht nur Inhalte zu übertragen, wie beispielsweise E-Mails, Web-Inhalte und Videos, sondern auch die Fertigkeiten und die handwerklichen Fähigkeiten einer Person.

Durch die kurzen Latenzzeiten, die mit 3rd Generation Partnership Project (3GPP) Mobilfunksystemen der fünften Generation (5G) nach dem Stand der Technik möglich werden, können etwa feinmotorische Bewegungen eines Menschen über ein Kommunikationsnetz übertragen und an anderen Orten ausgeführt werden.

Taktile und haptische, also den Tastsinn betreffende Anwendungen, können über das Mobilfunknetz gesteuert werden und es können dabei nicht nur Inhalte, sondern auch die handwerklichen Fähigkeiten einer Person über Kommunikationsnetze übertragen werden. So können auch Anwendungen aus dem Bereich der virtuellen Realität, in denen in einem geteilten Umfeld mehrere Teilnehmer über ein Kommunikationsnetz miteinander verbunden sind und über ein Tool gemeinsam Arbeiten ausführen, auf den Tastsinn erweitert werden.

Um Cyber-Sickness zu vermeiden, besteht eine wesentliche Anforderung für Anwendungen aus dem Bereich des taktilen Internets darin, dass Signale, die unterschiedliche menschliche Sinnesorgane ansprechen, ohne einen größeren zeitlichen Versatz beim Anwender eintreffen, damit die Wahrnehmungen über die unterschiedlichen Sinnesorgane im menschlichen Gehirn nahezu synchron kombiniert werden können.

Ähnlich wie ein schlecht synchronisierter Film würde ein zeitversetztes Eintreffen von akustischen, visuellen und den Tastsinn betreffenden Reizen den Anwender verwirren, was einen Einsatz taktiler Anwendungen im Weg stehen kann.

Für taktile Anwendungen spielt die Qualität der Rückantwort eine entscheidende Rolle. Werden beispielsweise die an einer steuernden Domain der taktilen Architektur ausgeführten Arbeiten auf eine örtlich davon entfernte, gesteuerte Domain übertragen und von einem Tele-Operator, z.B. einem gesteuerten Roboter umgesetzt, so ist die Information über den Rückkanal für den in der steuernden Domain arbeitenden Operator eine wesentliche Orientierung. Die über einen Tastapparat ausgeübte Kraft muss in ihrem Ergebnis wieder spürbar sein, beispielsweise in der haptischen Wahrnehmung, dem Ertasten einer mechanischen Verformung des bearbeiteten Gegenstandes mittels des verwendeten Tastapparats. Dazu ist auch das zeitgleiche Eintreffen der zugehörigen akustischen und optischen Rückantworten ein wesentlicher Bestandteil für das erfolgreiche Zusammensetzen dieser Reize in einem menschlichen Gehirn.

Vor diesem Hintergrund liegt der vorliegenden Erfindung die Aufgabe zugrunde, ein System zur Erfassung und Ausgabe von Eigenschaften zu verbessern.

Diese Aufgabe wird durch den Gegenstand mit den Merkmalen des unabhängigen Anspruchs 1 gelöst. Vorteilhafte Weiterbildungen der Erfindung sind Gegenstand der abhängigen Ansprüche.

Demnach ist erfindungsgemäß vorgesehen, dass die Umwandlungsmittel dazu ausgebildet sind, die an dem Erfassungsort erfasste Eigenschaft in die entsprechende Ausgabe an dem Steuerort umzuwandeln.

Vorzugsweise ist vorgesehen, dass das Erfassungsmittel ein Taststab, ein Tastapparat, Teil eines Wearables, ein Piezoelement, ein Drucksensor oder ein virtuelles Mittel und/oder das Steuermittel Teil eines Wearables, ein Piezoelement, ein Lautsprecher, Teil eines Roboters oder ein virtuelles Mittel ist.

Es kann vorgesehen sein, dass die Eigenschaft und/oder Ausgabe eine Position und/oder Kraft und/oder Materialeigenschaft ist.

Es ist denkbar, dass das System ferner Rückkopplungsmittel umfasst, wobei das Erfassungsmittel ferner dazu ausgebildet ist, an dem Erfassungsort eine Ausgabe vorzunehmen, wobei das Steuermittel ferner dazu ausgebildet ist, an dem Steuerort eine der Ausgabe entsprechende Eigenschaft zu erfassen, wobei die Rückkopplungsmittel dazu ausgebildet sind, die an dem Steuerort erfasste Eigenschaft in die Ausgabe an dem Erfassungsort umzuwandeln.

Der Erfassungsort und der Steuerort können zusammenfallen, wobei auch das Erfassungsmittel und das Steuermittel dieselben sein können. Dies ist insbesondere bei einer virtuellen Umgebung denkbar. Also beispielsweise, wenn Eigenschaften in einem virtuellen Raum vorliegen und an einem Erfassungs- und/oder Steuermittel ausgegeben werden.

Vorzugweise ist vorgesehen, dass die Eigenschaft am Erfassungsort eine in zweidimensionalen Koordinaten, drei- oder mehrdimensionalen Koordinaten, Zylinderkoordinaten oder Kugelkoordinaten bestimmbare Position und/oder Kraft und die Ausgabe am Steuerort eine in zweidimensionalen Koordinaten, drei- oder mehrdimensionalen Koordinaten, Zylinderkoordinaten oder Kugelkoordinaten bestimmbare Position und/oder Kraft ist.

Denkbar ist, dass das System ferner Korrekturmittel umfasst, wobei die Korrekturmittel dazu ausgebildet sind, Fehler bei der Nutzung des Systems automatisch zu korrigieren.

Es kann vorgesehen sein, dass das System ferner Markierungsmittel, insbesondere eine Brille, umfasst, wobei die Markierungsmittel dazu ausgebildet sind, Bereiche am Erfassungsort, vorzugsweise mittels Augenblinzelns, zu markieren.

Vorzugsweise ist vorgesehen, dass an dem Erfassungsort ein Kraftbereich definiert ist, wobei beim Ausüben einer Kraft auf den Kraftbereich durch das Erfassungsmittel eine für den Kraftbereich definierte Kraft aufgenommen wird.

Denkbar ist, dass das Erfassungsmittel und das Steuermittel mindestens indirekt über Kommunikationsmittel zur Fernkommunikation, vorzugsweise über ein Mobilfunknetz nach dem 5G-Standard verbunden sind.

Um beispielsweise eine Videokonferenz realistischer zu gestalten, können auch die den Tastsinn betreffenden Reize während der Konferenz übertragen werden. Z.B. kann die Kraft eines Windstoßes durch die zeitabhängige Änderung des Luftdruckes am Ort der entfernten Teilnehmer, z.B. durch Piezoelemente übertragen werden. Dieses Prinzip lässt sich auf virtuelle Spiele (Gaming) oder Lernspiele (Serious Gaming) erweitern, deren Anwendungen den Tastsinn mit einbeziehen.

Eine nach Art einer optischen Perspektivenkorrektur vorgenommene Maßnahme kann auch auf taktile Anwendungen angewandt werden, indem beispielsweise die Richtung der ausgeübten Kraft korrigiert oder manipuliert wird.

Ist es beispielsweise für einen Operator in der steuernden Domain einfacher, auf einer horizontalen Ebene zu arbeiten, so kann diese Arbeit und die damit verbundene Kraftausübung auf eine, dem Raum in der gesteuerten Domain angepassten mehrdimensionale Fläche transferiert werden und analog zu einer optischen Perspektivenkorrektur auch eine Veränderung der auszuübenden Kraft ermöglicht werden. Dies kann in einer weiteren Ausprägung mittels einer Transformation auf geeignete Koordinatensysteme, z.B. auf Zylinder- oder Kugelkoordinaten, erfolgen, um die perspektivischen Korrekturen für taktile Arbeiten zu übermitteln.

Auch für eine mit Sensoren und Aktuatoren ausgestattete Kleidung, sogenannte Wearables, kann die Richtung der ausgeübten Kraft erkennbar sein. Ähnlich wie beim Schallhub eines Lautsprechers kann die Richtung des erzeugten Drucks so gesteuert werden, dass sie mit den jeweiligen akustischen und optischen Signalen in Einklang ist.

Die vorliegende Erfindung bezieht sich vorzugsweise auf das Gebiet der Kommunikationssysteme, insbesondere auf ein System und ein Verfahren für ein verbessertes subjektives Empfinden bei Anwendungen, die mehrere Sinnesorgane ansprechen.

Bekannte Anwendungen im Bereich der Virtual-Reality beinhalten u.a. das Eintauchen in eine andere Umgebung, virtuelle Bewegungen in einem anderen Raum oder das Betrachten eines Gegenstandes von allen Seiten. Dort können vorzugsweise auch Arbeiten ausgeführt werden, die aus der virtuellen in die reelle Umgebung übertragen werden.

Für schwer zugängliche Bereiche in der gesteuerten Domain kann der Operator die Arbeit in der steuernden Domain auf einer zweidimensionalen Fläche oder einer mit dem Haptic-Device gut handhabbaren gekrümmten dreidimensionalen Fläche ausführen. Denkbar ist, dass der Ort und die Art der Arbeit, insbesondere das Ausüben einer Kraft in der gesteuerten Domain auf eine beliebig geformte Fläche transferiert werden. So soll beispielsweise das Bearbeiten einer Oberfläche in der steuernden Domain durch ein vereinfachtes Modell der Struktur und Form erfolgen, in der gesteuerten Domain aber in der dort reell existierenden Form angewandt werden. Damit verwinkelte Bereiche des reellen Gegenstandes in der gesteuerten Domain für den Operator in der steuernden Domain sichtbar werden, können Kameraerfassungen der reell existierenden Form aufgenommen werden und einer Perspektivenkorrektur unterzogen werden, damit sie in dem vereinfachten Modell in der steuernden Domain angezeigt werden können. Stark verwinkelte und für die menschliche Hand schwer zugängliche Bereiche der gesteuerten Domain können beispielsweise durch Linien, Kurven und unterschiedliche Farbgebung auf das in der steuernden Domain benutzte vereinfachte zweidimensionale oder dreidimensionale Modell projiziert werden, damit der Operator die Richtung und Stärke der Kraft gezielt beeinflussen kann.

Der Tastsinn weist überraschende Analogien zu den beiden Sinnen Sehen und Hören auf. Ein Mensch pflegt so zu arbeiten, wie er es gewohnt ist. Das würde an bestimmten technischen Systemen aber zu Fehlern führen, vergleichbar mit einer fehlerhaft wiedergegebenen Blickrichtung bei Videokonferenzen, wenn die Richtung einer aufnehmenden Kamera und die Blickrichtung in einen Bildschirm auseinanderfallen. Das System korrigiert vorzugsweise solche Fehler in automatischer Weise.

Beispielsweise beim Arbeiten in einer Umgebung, in der man das, was man normalerweise macht, schwer oder gar nicht realisieren kann, werden Fehler vorzugsweise korrigiert.

Es kann vorzugsweise eine Erweiterung einer Richtungskorrektur optischer und akustischer Systeme auf den Tastsinn zur Harmonisierung der die unterschiedlichen Sinnesorgane ansprechenden Reize für taktile Anwendungen erfolgen. Vorzugsweise ist der Einsatz der Erfindung im Bereich der virtuellen Realität zum Steuern und Bearbeiten von Objekten im virtuellen Umfeld durch Augenschlag oder Bewegung der Ohren oder Nase und Umsetzung dieser Arbeiten in der reellen Umgebung durch einen Tele-Operator vorgesehen.

Es erfolgt in anderen Worten vorzugsweise eine Perspektivenkorrektur für taktile Anwendungen. Der Operator arbeitet beispielsweise auf der flachen Ebene, in der reellen Welt wird dies auf den dort bestehenden dreidimensionalen Raum transferiert.

Es erfolgt vorzugsweise eine Harmonisierung der Kraftausübung in der gesteuerten Domain bei einer nicht einheitlichen Kraftausübung in der steuernden Domain einerseits, sowie bewusste Diversifizierung der Kraftausübung in der gesteuerten Domain für Bereiche, die in der steuernden Domain unterschiedlich markiert sind, für die aber in der steuernden Domain eine einheitliche Kraftausübung erfolgt.

Die Erfindung betrifft auch ein Verfahren zur Erfassung und Ausgabe einer Eigenschaft mit einem erfindungsgemäßen System mit den folgenden Schritten:
a) Erfassen einer Eigenschaft an einem Erfassungsort und/oder Steuerort durch ein Erfassungsmittel und/oder Steuermittel;
b) Umwandeln der erfassten Eigenschaft in eine Ausgabe an einem Steuerort und/oder Erfassungsort;
c) Ausgabe der umgewandelten Eigenschaft an dem Steuerort und/oder Erfassungsort durch mindestens einen Teil eines Steuermittels und/oder Erfassungsmittels.

Die hierin beschriebenen Merkmale sind mutatis mutandis vorzugsweise Merkmale des Systems als auch des Verfahrens.

Die Erfindung betrifft auch ein Computerprogramm, welches Befehle umfasst, die bewirken, dass das erfindungsgemäße System die Verfahrensschritte eines erfindungsgemäßen Verfahrens ausführt.

Die Erfindung betrifft auch ein computerlesbares Medium, auf dem das erfindungsgemäße Computerprogramm gespeichert ist.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können. Ebenso schließt die Verwendung des Plurals auch das Vorhandensein des fraglichen Elementes in der Einzahl ein und umgekehrt umfasst der Singular auch mehrere der fraglichen Elemente. Weiterhin können alle hierin beschriebenen Merkmale der Erfindung beliebig miteinander kombiniert oder voneinander isoliert beansprucht werden.

Weitere Vorteile, Merkmale und Effekte der vorliegenden Erfindung ergeben sich aus der nachstehenden Beschreibung bevorzugter Ausführungsbeispiele unter Bezugnahme auf die Figuren, in welchen gleiche oder ähnliche Bauteile durch dieselben Bezugszeichen bezeichnet sind. Hierbei zeigen:
- Fig. 1:: eine schematische Darstellung eines Teils einer Ausführungsform eines erfindungsgemäßen Systems.
- Fig. 2:: eine schematische Darstellung einer Ausführungsform einer Vorrichtung zur Verbesserung der nonverbalen Kommunikation.

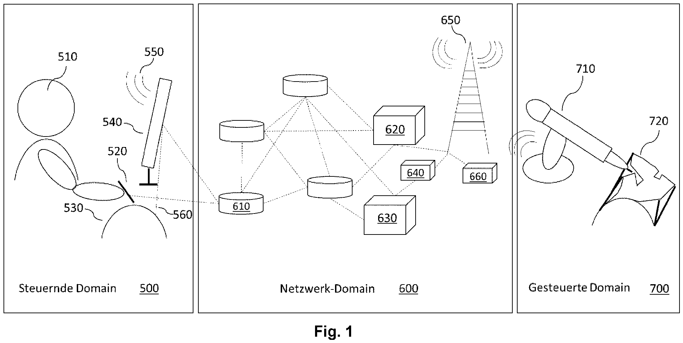

In Fig. 1 ist eine Architektur eines Systems dargestellt, die für die taktile Anwendung in drei Bereiche unterteilt ist. Zu sehen ist eine steuernde Domain 500, eine Netzwerk-Domain 600 und eine gesteuerte Domain 700.

In der steuernden Domain 500 bedient ein Operator 510 ein Haptic-Device 520 und übt mit einem Eingabestab eine Kraft auf eine gekrümmte Oberfläche 530 aus.

Der Tastapparat ist nach dem Stand der Technik typischerweise als Roboterarm ausgelegt, an dem der Eingabestab (Taststab) befestigt ist.

Der Roboterarm erfasst die Position des Taststabs, wobei dieser über seine Spitze eine Kraft aufnehmen und ausüben kann. Die erfasste Position des Taststabes, sowie die Größe der ausgeübten Kraft wird vom Haptic-Device 520 über die Netzwerk-Domain 600 an die gesteuerte Domain 700 übertragen.

In der Netzwerk-Domain 600, hier für das Beispiel eines 3GPP Mobilfunknetzes der fünften Generation (5G), werden die vom Haptic-Device 520 erfassten Daten über die Router 610 des Transport-Netzwerkes, der Access and Mobility Management Function (AMF) 620 bzw. Session Management Function (SMF) 630 und User Plane Function (UPF) 640 an die Basisstation (gNodeB) 650 des Mobilfunknetzes weitergeleitet.

Zudem ist gemäß Stand der Technik eine sogenannte Tactile Support Engine 660 am Rand des Kommunikationsnetzes (Mobile Edge Cloud) und damit nahe an der taktilen Ausübung vorhanden.

Von der Basisstation werden die Daten in Abwärtsrichtung an den Tele-Operator 710 in der gesteuerten Domain 700 übertragen. Bei dem Tele-Operator 710 handelt es sich beispielsweise um einen gesteuerten Roboter, mit dem Arbeiten an einer im Raum gekrümmten, beliebig geformten Fläche 720 ausgeführt werden. Letztere kann in ihrer Beschaffenheit und räumlichen Ausdehnung für die menschliche Hand schwierig zugänglich sein, so dass die manuellen Arbeiten des Tele-Operators 710 bevorzugt auf einer planen oder nur leicht gekrümmten Fläche ausgeführt werden und eine geometrische Transformation auf die reelle Form des in der gesteuerten Domain 700 zu bearbeitenden Gegenstandes erfolgen kann.

Hierbei können zusätzlich optische und akustische Signale aus der gesteuerten Domain 700 in Aufwärtsrichtung an die Netzwerk-Domain 600 übertragen werden und in der steuernden Domain 500 als optische Signale beispielsweise an einem Display 540 und als akustische Signale 550 dem Operator 510 zur Verfügung gestellt werden. Zusätzlich können die optischen und akustischen Signale auch über die Schnittstelle 560 an die Unterlage 530 übertragen werden, z.B. an ein Tablet, auf dessen Oberfläche der Eingabestab 520 aufsetzt.

In einer weiteren Ausprägung dieser Erfindung können die optischen Signale auf die Oberfläche der Unterlage 530 projiziert werden, so dass sie der Operator 510 beispielsweise als Linien oder farbliche Strukturen erkennen kann und seine Arbeitsweise an dieser Orientierungshilfe ausrichten kann. Hierzu erfolgt zunächst eine Transformation aus der in der gesteuerten Domain 700 verwendeten Geometrie hin zur Geometrie, die in der steuernden Domain 500 verwendet wird. Eine Perspektivenkorrektur kann hierbei durchgeführt werden, so dass verwinkelte Bereiche der reellen Form in dem vereinfachten geometrischen Modell, das in der steuernden Domain 500 verwendet wird, wiedergegeben werden.

In einer bevorzugten Realisierung werden die akustischen Signale 550 aus der Richtung bzw. dem Bereich abgegeben, auf dem der Operator 510 arbeitet. Beispielsweise aus der Richtung des vereinfachten Modells für die Oberfläche 530, auf der der Operator 510 mit seinem Haptic-Device 520 arbeitet. Dadurch erhalten die drei Sinne Hören, Sehen und Fühlen ihre Wahrnehmungen aus derselben Richtung.

Die Erweiterungen im Education-Bereich auf zusätzliche Sinnesorgane wie den Tastsinn erlauben einem Trainer die Bewegungen eines Lernenden, z.B. beim Erlernen eines Musikinstruments, virtuell zu fühlen und die Stärke der angewandten Kraft zu spüren. Dieses Konzept kann in einer weiteren Ausprägung dieser Erfindung unterstützt werden, in dem über eine Kamera ein Auto-Fokus, Auto-Zoom und eine Auto-Kameraführung auf die Finger bzw. auf das, was sich bewegt, erfolgt und übertragen wird.

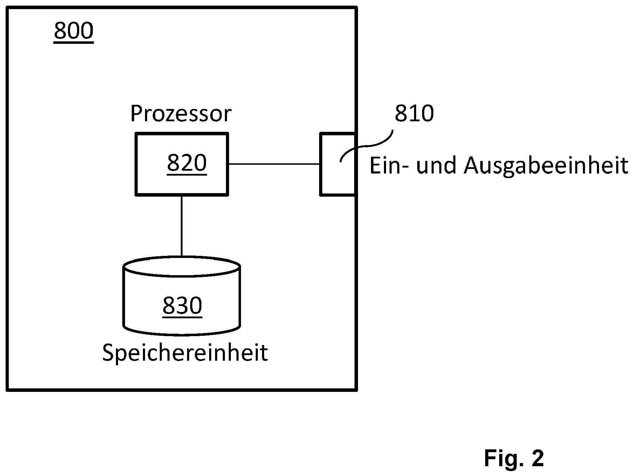

Die in Fig. 2 dargestellte Vorrichtung 800 zur Verbesserung der nonverbalen Kommunikation umfasst eine Ein- und Ausgabeeinheit 810 zum Einlesen der Daten und zur Ausgabe der verarbeiteten Daten, einen Prozessor 820 zum Verarbeiten der Daten, eine Speichereinheit 830 und eine Software zum Ausführen des Programms. Die Hardware-Komponenten sind über ein Bussystem miteinander verbunden. Diese Vorrichtung kann in einer separaten Hardware-Einheit bereitgestellt werden oder als Bestandteil bestehender Kommunikationssysteme realisiert werden und ist damit für den Einsatz in Kommunikationsmitteln wie Personal Computern (PC), Mobilfunk-Endgeräten, insbesondere Smartphones und Tablets, sowie Virtual-Reality-Plattformen vorgesehen. Dies betrifft vorzugsweise Kommunikationsmittel, in denen Kameras, Mikrofone und Mittel zur taktilen Kommunikation zum Einsatz kommen.

Für spezielle Applikationen trägt in einem weiteren Beispiel ein Anwender eine Virtual-Reality-Brille, in die visuelle Objekte, Informationen und Filme eingeblendet werden können. Zudem existiert vorzugsweise eine 360°-Kamera im Raum. Die Raumkamera nimmt zunächst Bilder des Teilnehmers ohne Brille von allen Seiten auf. Anschließend setzt der Virtual-Reality-Teilnehmer die Brille auf und aus den Erfassungen der 360°-Kamera wird die Brille wieder herausgerechnet. Eine weitere Kamera befindet sich in der Brille und zeichnet die Blickrichtung und den Blickwinkel der Augen auf. Damit wird ein Mitführen der Augen erreicht. Der Teilnehmer kann damit die Brille nicht nur zum Eintauchen in eine virtuelle Umgebung nutzen, sondern es kann zudem die Augenbewegung des Teilnehmers ermittelt werden und damit der Blicckontakt zu weiteren Teilnehmern ermöglicht werden, die sich entweder ebenfalls innerhalb der virtuellen Umgebung befinden oder außerhalb davon in der reellen Umgebung. Durch Zwinkern mit den Augen soll der aktuell betrachtete Bereich innerhalb des virtuellen Umfeldes markiert werden, ähnlich wie bei einem einfachen Klick oder Doppelklick auf die Maustaste eines Computers. Anschließend kann der markierte Bereich bearbeitet werden und es können dort taktile Arbeiten ausgeführt werden, z.B. das mechanische Verändern dieses Bereichs, das dann in der gesteuerten Domain der reellen Umgebung durch einen Tele-Operator umgesetzt wird. Man steuert damit durch den Blick die sich in der virtuellen Umgebung befindlichen Gegenstände, markiert sie und führt taktile Arbeiten aus, deren Werkzeuge man ebenso durch den Blick steuert, über das Bewegen der Ohren oder über einen mit den Händen bedienten Tastapparat (Haptic-Device), über den die zu bearbeitenden Objekte berührt, gefühlt und manipuliert werden können.

Im Folgenden sind weitere Ausführungsbeispiele beschrieben.

Ein weiteres Beispiel betrifft die Homogenisierung der Kraftausübung. Analog zu Fig. 1 bearbeitet der Operator 510 in der steuernden Domain 500 mittels seines Taststabs 520 die Oberfläche eines metallischen Gegenstandes 720, der sich in der gesteuerten Domain 700 befindet.

Ein Beispiel dieser Arbeit ist das Abschleifen des Gegenstandes, wobei die über den Taststab 520 in der steuernden Domain 500 ausgeübte Kraft gegebenenfalls verstärkt oder verringert wird und in der gesteuerten Domain 700 auf den zu bearbeitenden Gegenstand 720 angewandt wird. Bei der Bearbeitung des Gegenstandes ist vorzugsweise vorgesehen, dass überall auf der markierten Oberfläche die gleiche Kraft ausgeübt wird. Da die menschliche Hand den Taststab 520 nicht an allen Stellen gleich stark auf die Unterlage 530 drückt, kann eine durch das System berechnete Homogenisierung der Kraft durchgeführt werden, so dass auf den zu bearbeitenden Gegenstand 720 an allen Stellen dieselbe Kraft einwirkt. Dies ist vor allem für diejenigen Stellen des Gegenstandes 720 vorteilhaft, für die der Operator 510 in der steuernden Domain 500 seine Hände nicht so stark krümmen kann und die auf den Taststab ausgeübte Kraft nicht einheitlich zu der an anderen Stellen ausgeübten Kraft ist.

Der Operator 510 macht einen Fehler, wenn er z.B. seine Hände nicht so stark krümmen kann und an bestimmten Stellen den Taststab bzw. Eingabestab mit geringerer Kraft auf die Unterlage oder das Tablet drückt. Diese Inhomogenität wird vorzugsweise ausgeglichen, indem in der gesteuerten Domain 700 auf der gesamten zu bearbeitenden Oberfläche die gleiche Kraft ausgeübt wird.

Ein weiteres Beispiel betrifft die Transformation der dreidimensionalen, beliebig geformten Fläche in der gesteuerten Domain 700 auf eine leichter zu bearbeitende zweidimensionale Fläche in der steuernden Domain 500. Als Beispiel wird ein Kotflügel eines Fahrzeuges betrachtet, der gemäß Fig. 1 auf der Unterlage 530, z.B. einem Tablet, in der steuernden Domain 500 zweidimensional dargestellt wird. Durch das Einblenden von Linien, Kurven und Muster können räumliche Änderungen des reellen Gegenstandes 720 aus der gesteuerten Domain 700 angezeigt werden. Der Operator 510 in der steuernden Domain 500 hat nun die Möglichkeit, über das Haptic-Device 520 bequem Arbeiten auf einer planen Fläche durchzuführen. Abweichend von der Darstellung in Fig. 1 sei die Unterlage 530 beispielsweise durch ein flaches Tablet ersetzt. Denkbare Arbeiten sind z.B. das Schleifen, Spritzen oder Streichen, das nun auf der planen Ebene in der steuernden Domain 500 virtuell ausgeführt werden kann und auf beliebig gekrümmte Gegenstände 720 in der gesteuerten Domain 700 angewandt werden kann, wie beispielsweise auf die rundliche Form eines Kotflügels. Damit können auch komplizierte Winkelstellungen gut erreicht werden.

Der Mensch macht dabei Fehler, weil er bestimmte Positionen mit seinen Handbewegungen nicht einnehmen kann und dadurch einzelne Bereiche des virtuell zu bearbeitenden Gegenstandes nicht hinreichend gut erreichen kann. Dies wird vorzugsweise durch die Transformation der Koordinaten von beliebig gekrümmten Räumen auf besser zu bearbeitende geometrische Formen erreicht und durch das System korrigiert.

Ein weiteres Beispiel betrifft das bewusste Ausüben unterschiedlich starker Kräfte in der gesteuerten Domain für Bereiche, die in der steuernden Domain eine einheitliche Kraftausübung erfahren, aber anders markiert sind. Ein Zahnarzt, der am Tablet - beispielsweise über unterschiedliche Farbgebung - gesunde und kranke Stellen des Zahnes unterschiedlich dargestellt bekommt, kann beispielsweise beim virtuellen Polieren der Zähne in der steuernden Domain 500 überall die gleiche Kraft ausüben, da dies für ihn einfacher ist. In der gesteuerten Domain 700 wird aber an Bereichen, die am Tablet farblich anders dargestellt sind, eine unterschiedliche Kraft ausgeübt.

In der Humanmedizin verwendete, bildgebende Geräte können gesundes und krankes Gewebe farblich unterschiedlich darstellen. Auch hier kann eine Diversifizierung zwischen der in der steuernden Domain 500 ausgeübten und der in der gesteuerten Domain 700 realisierten Kraftausübung ermöglicht werden, für die eine Abhängigkeit der Farbgebung oder anderer Markierungen benutzt wird. Durch diese automatisierte Korrekturmaßnahme kann erreicht werden, dass keine oder nur geringe Kräfte außerhalb des markierten Bereichs ausgeübt werden. Ein versehentliches Überschreiten des markierten Bereichs durch den Operator 510 in der steuernden Domain 500 hat damit keine Auswirkungen auf den Patienten in der gesteuerten Domain 700. Auch hier wird eine Schwäche im reellen System korrigiert: Der Mensch würde einen Fehler begehen, das System korrigiert ihn automatisch.

Ein weiteres Beispiel betrifft ein Wearable, also z.B. einen Handschuh, wobei der Handschuh Erfassungs- und/oder Steuermittel aufweist und mit einem Computer verbunden ist. In diesem Computer sind nun virtuelle Gegenstände in einer virtuellen Domäne vorhanden, wobei der Handschuh einem Nutzer des Handschuhs den Eindruck vermittelt, er würde diese Gegenstände in der Realität bewegen und/oder erfühlen, wenn in der virtuellen Domäne eine Bewegung und/oder Erfühlung des virtuellen Gegenstandes durch einen virtuellen Zwilling des Handschuhs simuliert wird.

Damit kann der Nutzer beispielsweise mit seiner Hand an der er den Handschuh trägt Fühlbewegungen vollziehen, wobei ihm durch die Erfassungs- und/oder Steuermittel in dem Handschuh der Eindruck vermittelt wird, als befühle er einen Gegenstand, wie beispielsweise einen Pullover. Damit kann eine reale Einkaufsituation beim Kauf eines echten Pullovers simuliert werden, wobei beispielsweise die Stoffqualität des Pullovers zwischen den Fingern gefühlt wird. Dieses Fühlen kann beim Kauf eines Pullovers im Internet gemäß des heutigen Stands der Technik nicht erfolgen, da der Pullover dem Nutzer nicht vorliegt. Mittels des Handschuhs kann der Nutzer aber das Befühlen des Pullovers simulieren.

## Patentansprüche

1. System, wobei das System ein Erfassungsmittel, Umwandlungsmittel und ein Steuermittel umfasst, wobei das Erfassungsmittel dazu ausgebildet ist, an einem Erfassungsort eine Eigenschaft mit wenigstens einem Teil zu erfassen, wobei das Steuermittel dazu ausgebildet ist, an einem Steuerort eine der Eigenschaft entsprechende Ausgabe vorzunehmen, **dadurch gekennzeichnet, dass** die Umwandlungsmittel dazu ausgebildet sind, die an dem Erfassungsort erfasste Eigenschaft in die entsprechende Ausgabe an dem Steuerort umzuwandeln.

2. System nach Anspruch 1, **dadurch gekennzeichnet, dass** das Erfassungsmittel ein Taststab, ein Tastapparat, Teil eines Wearables, ein Piezoelement, ein Drucksensor oder ein virtuelles Mittel und/oder das Steuermittel Teil eines Wearables, ein Piezoelement, ein Lautsprecher, Teil eines Roboters oder ein virtuelles Mittel ist.

3. System nach Anspruch 1 oder 2, **dadurch gekennzeichnet, dass** die Eigenschaft und/oder Ausgabe eine Position und/oder Kraft und/oder Materialeigenschaft ist.

4. System nach einem der vorhergehenden Ansprüche, **dadurch gekennzeichnet, dass** das System ferner Rückkopplungsmittel umfasst, wobei das Erfassungsmittel ferner dazu ausgebildet ist, an dem Erfassungsort eine Ausgabe vorzunehmen, wobei das Steuermittel ferner dazu ausgebildet ist, an dem Steuerort eine der Ausgabe entsprechende Eigenschaft zu erfassen, wobei die Rückkopplungsmittel dazu ausgebildet sind, die an dem Steuerort erfasste Eigenschaft in die Ausgabe an dem Erfassungsort umzuwandeln.

5. System nach einem der vorhergehenden Ansprüche, **dadurch gekennzeichnet, dass** die Eigenschaft am Erfassungsort eine in zweidimensionalen Koordinaten, drei- oder mehrdimensionalen Koordinaten, Zylinderkoordinaten oder Kugelkoordinaten bestimmbare Position und/oder Kraft und die Ausgabe am Steuerort eine in zweidimensionalen Koordinaten, drei- oder mehrdimensionalen Koordinaten, Zylinderkoordinaten oder Kugelkoordinaten bestimmbare Position und/oder Kraft ist.

6. System nach einem der vorhergehenden Ansprüche, **dadurch gekennzeichnet, dass** das System ferner Korrekturmittel umfasst, wobei die Korrekturmittel dazu ausgebildet sind, Fehler bei der Nutzung des Systems automatisch zu korrigieren.

7. System nach einem der vorhergehenden Ansprüche, **dadurch gekennzeichnet, dass** das System ferner Markierungsmittel, insbesondere eine Brille, umfasst, wobei die Markierungsmittel dazu ausgebildet sind, Bereiche am Erfassungsort, vorzugsweise mittels Augenblinzelns, zu markieren.

8. System nach einem der vorhergehenden Ansprüche, **dadurch gekennzeichnet, dass** an dem Erfassungsort ein Kraftbereich definiert ist, wobei beim Ausüben einer Kraft auf den Kraftbereich durch das Erfassungsmittel eine für den Kraftbereich definierte Kraft aufgenommen wird.

9. System nach einem der vorhergehenden Ansprüche, **dadurch gekennzeichnet, dass** das Erfassungsmittel und das Steuermittel mindestens indirekt über Kommunikationsmittel zur Fernkommunikation, vorzugsweise über ein Mobilfunknetz nach dem 5G-Standard verbunden sind.

10. Verfahren zur Erfassung und Ausgabe einer Eigenschaft mit einem System nach einem der vorhergehenden Ansprüche mit den folgenden Schritten:
a) Erfassen einer Eigenschaft an einem Erfassungsort und/oder Steuerort durch ein Erfassungsmittel und/oder Steuermittel;
b) Umwandeln der erfassten Eigenschaft in eine Ausgabe an einem Steuerort und/oder Erfassungsort;
c) Ausgabe der umgewandelten Eigenschaft an dem Steuerort und/oder Erfassungsort durch mindestens einen Teil eines Steuermittels und/oder Erfassungsm ittels.

11. Computerprogramm, welches Befehle umfasst, die bewirken, dass das System eines der Ansprüche 1 bis 9 die Verfahrensschritte des Anspruchs 10 ausführt.

12. Computerlesbares Medium, auf dem das Computerprogramm nach Anspruch 11 gespeichert ist.
